## Europäisches Patentamt

## European Patent Office

## Office européen des brevets

(19)

(11) Veröffentlichungsnummer: **0 001 219**
**B1**

(12)

# EUROPÄISCHE PATENTSCHRIFT

(45) Veröffentlichungstag der Patentschrift:
**12.08.81**

(51) Int. Cl.³: **C 03 C 27/08**, B 23 K 35/00

(21) Anmeldenummer: **78100743.0**

(22) Anmeldetag: **24.08.78**

(54) **Verfahren zum mittelbaren Verbinden zweier Teile durch Verschweissung zweier Metallauflagen.**

(30) Priorität: **23.09.77 DE 2742921**

(43) Veröffentlichungstag der Anmeldung:
**04.04.79 Patentblatt 79/7**

(45) Bekanntmachung des Hinweises auf die Patenterteilung:
**12.08.81 Patentblatt 81/32**

(84) Benannte Vertragsstaaten:
**CH FR GB NL**

(56) Entgegenhaltungen:
**DE-A-2 460 207**
**DE-B-1 254 774**
**FR-A-899 816**
**GB-A-1 031 436**
**US-A-3 798 746**

(73) Patentinhaber: **SIEMENS AKTIENGESELLSCHAFT Berlin und München, Postfach 22 02 61, D-8000 München 22 (DE)**

(72) Erfinder: **Burkart, Klaus, Würmtalstrasse 144, D-8000 München 70 (DE)**
Erfinder: **Wintzer, Manfred, Planegger Strasse 13, D-8000 Unterpfaffenhofen (DE)**

## Verfahren zum mittelbaren Verbinden zweier Teile durch Verschweißung zweier Metallauflagen

Die Erfindung betrifft ein Verfahren zum mittelbaren Verbinden zweier Teile durch Verschweißung zweier Metallauflagen, bei welchem die Metallauflagen im Vakuum auf die Verbindungsflächen aufgebracht und im Vakuum miteinander verschweißt werden.

Ein derartiges Verfahren ist beispielsweise aus der DE-A-2 253 913 bekannt. Bei diesem bekannten Verfahren soll zur Herstellung einer akustischen Lichtablenkeinrichtung ein beispielsweise aus Quarz bestehendes akusto-optisches Bauelement mit einem beispielsweise als piezoelektrischer Kristall ausgebildeten elektromechanischen Wandler verbunden werden. Hierzu werden in einer Vakuumkammer auf die Verbindungsflächen der zu verbindenden Teile zwei aufeinanderfolgende Schichten aus Gold und Chrom und aus Indium aufgedampft, wobei die aus Gold und Chrom bestehende Schicht eine Stärke von wenigen Tausend Angström-Einheiten und die Indiumschicht etwa die gleiche Stärke erhält. Anschließend werden die mit Indium überzogenen Oberflächen im Vakuum für einige Minuten mit einem Druck von etwa 2800 bis 3500 N/cm² zusammengedrückt, wobei die beiden Indiumschichten durch Kaltverschweißen miteinander verbunden werden. Die auf diese Weise hergestellte mittelbare Verbindung zählt zu der Gruppe der nicht lösbaren Verbindungen, d. h. sie kann nur bei mechanischer Überbeanspruchung durch einen Bruch gelöst werden.

Ein ähnliches Verfahren wird in der US-A-3 798 746 beschrieben, wo ebenfalls verschiedene Schichten aufgebaut werden, die auch mit einem hohen Druck von ca. 3000 N/cm² (4000 bis 5000 psi) miteinander verschweißt werden.

Die vorstehend beschriebenen bekannten Verfahren können jedoch insbesondere dann nicht für beliebige Werkstoffe angewandt werden, wenn die Schichtstärken der Metallauflagen wesentlich dünner gewählt werden. Es wurde jedoch herausgefunden, daß mit Abnahme der Schichtstärken der Metallauflagen der für das Schweißen erforderliche Druck gesenkt werden kann. So braucht bei Schichtstärken der Metallauflagen zwischen 0,5 und 55 nm praktisch kein Druck angewandt werden, was insbesondere bei empfindlichen Werkstoffen von Vorteil ist. Bei geringen Schichtstärken der Metallauflagen können beispielsweise bei akustooptischen Bauelementen aus Bleimolybdat oder bei piezokeramischen Wandlern aus Blei-Zirkon-Titanaten keine festen und dauerhaften mittelbaren Verbindungen erzielt werden. Je nach der Stärke der auf diese Werkstoffe aufgebrachten Metallauflagen lassen sich keine oder keine dauerhaften Schweißverbindungen erzielen. Besteht eines der zu verbindenden Teile aus Metall, so können in den meisten Fällen ebenfalls keine dauerhaften Verbindungen hergestellt werden.

In der FR-A-899 816 wird ein Verfahren zum Löten von schwierig lötbaren Metallen beschrieben, wobei man auf die zu verbindenden Flächen zuerst eine Emailleschicht und anschließend eine Silberschicht aufbringt. Die zu verbindenden Teile können dann auf die übliche Weise gelötet werden.

Der vorliegenden Erfindung liegt somit die Aufgabe zugrunde, ein Verfahren zum mittelbaren Verbinden zweier Teile anzugeben, bei welchem beliebige, aus Glas, Metallen, keramischen Werkstoffen oder Kristallen bestehende Teile fest und dauerhaft miteinander verbunden werden können.

Diese Aufgabe wird erfindungsgemäß dadurch gelöst, daß bei einem Verfahren der eingangs genannten Art vor dem Aufbringen der Metallauflagen auf mindestens eine der Verbindungsflächen eine mindestens einmolekulare Zwischenschicht eines bleifreien Glases aufgebracht wird. Diese Zwischenschicht wirkt als Diffusionssperrschicht und wird auf diejenigen Teile aufgebracht, die auf Grund ihrer Materialeigenschaften die Schweißverbindung zwischen den Metallauflagen beeinträchtigen würden. So verhindert die Zwischenschicht beispielsweise, daß aus bleihaltigen Teilen das die Schweißverbindung störende Blei in die Metallauflagen diffundiert. Andererseits verhindert die Zwischenschicht aber auch, daß das Metall der Metallauflagen in eines oder beide der miteinander verbundenen Teile wegdiffundiert und hierdurch die Verbindung gelöst wird. Die je nach den Gegebenheiten auf eine oder beide der Verbindungsflächen aufgebrachte Zwischenschicht aus bleifreiem Glas ermöglicht somit sichere und dauerhafte mittelbare Verbindungen. Die Bindung der Zwischenschicht zu den Verbindungsflächen der Teile einerseits und zu den Metallauflagen andererseits ist ausgezeichnet, so daß mittelbare Verbindungen mit hoher mechanischer Festigkeit hergestellt werden können.

Die Zwischenschicht aus bleifreiem Glas kann in beliebiger Weise z. B. durch die Oxydation von Siliziumschichten oder durch Beschichten mit glasbildenden Substanzen auf die Verbindungsflächen aufgebracht werden. Besonders vorteilhaft ist es jedoch, wenn die Zwischenschicht im Vakuum aufgedampft oder ausgestäubt wird. Hierdurch wird eine besonders gute Haftung auf den Verbindungsflächen erzielt. Außerdem zeichnen sich aufgedampfte oder aufgestäubte Zwischenschichten durch äußerst gleichmäßige Schichtdicken und plane Oberflächen mit geringen Rauhtiefen aus.

Vorteilhaft wird eine maximal 100 nm starke Zwischenschicht aufgebracht. Diese Maßnahme führt zu einer weiteren Verbesserung der Oberflächenbeschaffenheit der Zwischenschicht, da sich beim Aufbringen über 100 nm starker Schichten erfahrungsgemäß unerwünschte Schichtdickenunterschiede nur schwer vermeiden lassen.

Bei einer bevorzugten Ausführungsform des erfindungsgemäßen Verfahrens wird eine 50 nm bis 80 nm starke Zwischenschicht aufgebracht. In diesem Bereich der Schichtdicke wird einerseits eine sicher funktionierende, d. h. nicht von Mikroporen durchsetzte Diffusionssperrschicht und andererseits eine hohe Oberflächenqualität erzielt.

Bei einer zweiten bevorzugten Ausführungsform des erfindungsgemäßen Verfahrens werden die Verbindungsflächen vor dem Aufbringen der Zwischenschicht auf eine Ebenheit von weniger als 1 µm und eine Rauhtiefe von weniger als 0,1 µm bearbeitet. Derartige Oberflächenqualitäten der Verbindungsflächen führen zu äußerst planen und glatten Oberflächen der Metallauflagen. Durch die flächige Berührung der Metallauflagen beim Verschweißen wird dann die Sicherheit und mechanische Festigkeit der Schweißverbindung weiter gesteigert.

Im folgenden wird ein Ausführungsbeispiel der Erfindung an Hand der Zeichnung näher erläutert.

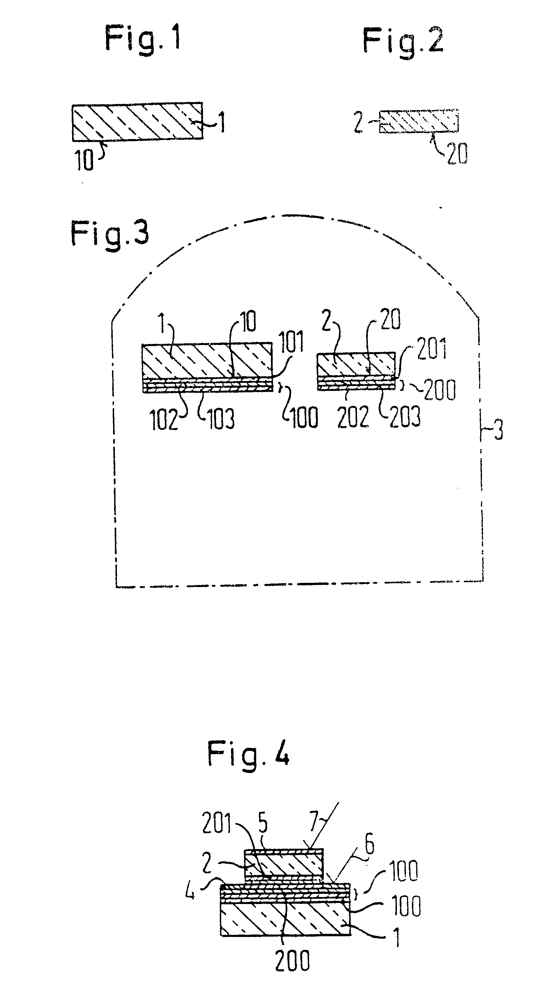

Die Fig. 1 bis 4 zeigen hierbei die einzelnen Verfahrensstadien bei der Herstellung einer akustischen Lichtablenkeinrichtung.

Fig. 1 zeigt ein aus Bleimolybdat bestehendes akustooptisches Bauelement 1, welches zur Bildung einer akustischen Lichtablenkeinrichtung mit einem in Fig. 2 dargestellten aus Blei-Zirkon-Titanat bestehenden piezoelektrischen Wandler 2 verbunden werden soll. Hierzu werden die Verbindungsflächen 10 bzw. 20 des Bauelementes 1 und des Wandlers 2 zunächst mittels bekannter Läpp- und Schleifverfahren auf eine Ebenheit von 1 µm, vorzugsweise 2 bis 3 Newton-Ringen gebracht. Nach einer sorgfältigen Reinigung der Verbindungsflächen 10 und 20 werden dann das Bauelement 1 und der Wandler 2 gemäß Fig. 3 in einer durch die strichpunktierte Linie 3 angedeuteten Vakuumkammer angeordnet. Innerhalb dieser Vakuumkammer 3 werden dann auf die Verbindungsfläche 10 und die Verbindungsfläche 20 jeweils ca. 80 nm starke Zwischenschichten 101 bzw. 201 eines bleifreien Glases aufgebracht. Das Aufbringen dieser Zwischenschichten 101 und 201 erfolgt beispielsweise mittels Kathodenzerstäubung durch Aufstäuben von reinem $SiO_2$, oder durch Verdampfen von Siliziummonoxid in sauerstoffhaltiger Restgasatmosphäre. Es kann jedoch auch ein sog. Aufdampfglas verwendet werden, welches ebenfalls bleifrei sein muß und am besten mit einer Elektronenstrahlkanone verdampft werden kann.

Nach dem Aufbringen der Zwischenschichten 101 und 201 werden auf diese jeweils zweischichtige Metallauflagen 100 bzw. 200 aufgedampft oder aufgestäubt. Zur Bildung der Metallauflage 100 wird auf die Zwischenschicht 101 eine ca. 2 nm starke Haftschicht 102 aus Titan und darauf eine ca. 10 nm starke Verbindungsschicht aus Gold aufgebracht. Gleichzeitig wird zur Bildung der Metallauflage 101 auf die Zwischenschicht 201 eine ca. 2 nm starke Verbindungsschicht 203 aus Gold aufgebracht.

Anstelle der zweischichtigen Metallauflagen 100 und 200 könnten auch einschichtige Metallauflagen in entsprechender Stärke verwendet werden. Die einschichtigen Metallauflagen könnten beispielsweise aus Titan oder Chrom bestehen.

Zur Fertigstellung der mittelbaren Verbindung zwischen dem Bauelement 1 und dem Wandler 2 werden dann innerhalb der Vakuumkammer 3 ohne vorhergehende Zwischenbelüftung die Verbindungsschichten 103 und 203 so zusammengebracht, daß sie sich flächig berühren und miteinander verschweißen. Dieser Vorgang erfolgt bei Raumtemperatur, so daß durch Abkühlen bedingte Spannungen vermieden werden. Beim Verschweißen der Verbindungsschichten 103 und 203 werden das Bauelement 1 und der Wandler 2 mit einem geringen in der Größenordnung von ca. 8 N/cm² liegenden Druck zusammengepreßt, damit eine möglichst intensive Berührung der zu verschweißenden Flächen entsteht.

Fig. 4 zeigt die fertiggestellte akustische Lichtablenkeinrichtung. Die Kontaktierung des piezoelektrischen Wandlers 2 erfolgt über zusätzliche aufgedampfte oder aufgestäubte Elektroden 4 und 5 und über Kontaktfedern 6 und 7.

Das vorstehend beschriebene Verfahren zur mittelbaren Verbindung des akustooptischen Bauelementes 1 mit dem piezoelektrischen Wandler 2 kann abgewandelt werden, wenn die zu verbindenden Teile aus bestimmten anderen Werkstoffen bestehen. Wird beispielsweise anstelle des piezoelektrischen Wandlers 2 ein aus Lithiumniobat stehender Wandler verwendet, so kann die Zwischenschicht 201 entfallen, da in dem Lithiumniobat keine die Verbindung störenden Stoffe enthalten sind.

Das erfindungsgemäße Verfahren ist für eine Vielzahl von Anwendungen geeignet und liefert vakuum- und druckdichte mittelbare Verbindungen. Die Wirkung der aus bleifreiem Glas bestehenden Zwischenschichten als Diffusionssperrschichten kommt hierbei insbesondere bei äußerst dünnen, zwischen 0,5 nm und 55 nm starken Metallauflagen zum Tragen. Diese dünnen Metallauflagen können durch störende Diffusionsvorgänge sehr rasch in ihrer Schweißbarkeit beeinträchtigt werden. Andererseits sind jedoch Metallauflagen in dieser Stärke erwünscht, da sie gegenüber stärkeren Metallauflagen eine praktisch drucklose Verschweißung ermöglichen. Bei stärkeren, beispielsweise im Bereich von einigen tausend Angström-Einheiten liegenden Metallauflagen wird die Schweißbarkeit weniger rasch beeinträchtigt, so daß in der Regel eine Verschweißung unter Anwendung von Druck vorgenommen werden kann. In letzterem Fall führen die störenden Diffusionsvorgänge zu einer langsamen Auflösung der Verbindung, sofern sie nicht durch die Zwischenschichten unterbunden werden. Mit Hilfe des erfindungsgemäßen Verfahrens können somit zwischen beliebigen aus Glas, Keramik, Metall oder Kristallen bestehenden Teilen, die nicht unmittelbar miteinander verbunden werden können, feste und dauerhafte mittelbare Verbindungen hergestellt werden. So können beispielsweise Fenster aus Quarzglas, Filtergläser oder Kristalle an Glas-Keramik- oder Metallflächen dauerhaft befestigt werden.

**Patentansprüche**

1. Verfahren zum mittelbaren Verbinden zweier Teile durch Verschweißung zweier Metallauflagen, bei welchem die Metallauflagen im Vakuum auf die Verbindungsflächen aufgebracht und im Vakuum miteinander verschweißt werden, dadurch gekennzeichnet, daß vor dem Aufbringen der Metallauflagen (100, 200) auf mindestens eine der Verbindungsflächen eine mindestens einmolekulare Zwischenschicht (101, 201) eines bleifreien Glases aufgebracht wird.

2. Verfahren nach Anspruch 1, dadurch gekennzeichnet, daß die Zwischenschicht (101, 201) im Vakuum aufgedampft oder aufgestäubt wird.

3. Verfahren nach Anspruch 1 oder 2, dadurch gekennzeichnet, daß eine maximal 100 nm starke Zwischenschicht (101, 201) aufgebracht wird.

4. Verfahren nach einem der vorhergehenden Ansprüche, dadurch gekennzeichnet, daß die Verbindungsflächen (10, 20) vor dem Aufbringen der Zwischenschicht (101, 201) auf eine Ebenheit von weniger als 1 μm und eine Rauhtiefe von weniger als 0,1 μm bearbeitet werden.

**Claims**

1. Process for indirectly connecting two parts by welding two metal coatings in which the metal coatings are applied to the connection surfaces in vacuum and are welded to one another in vacuum, characterised in that, prior to the application of the metal coatings (100, 200), an at least monomolecular (101, 201) of a lead-free glass is applied to at least one of the connection surfaces.

2. Process as claimed in Claim 1, characterised in that the intermediate layer (101, 201) is vapourdeposited of sprayed on.

3. Process as claimed in Claim 1 or 2, characterised in that an intermediate layer (101, 201) is applied which has a thickness of at most 100 nm.

4. Process as claimed in one of the preceding Claims, characterised in that, prior to the application of the intermediate layer (101, 201), the connection surfaces (10, 20) are worked to a flatness of less than 1 μm and a surface roughness of less than 0.1 μm.

**Revendications**

1. Procédé de liaison indirecte de deux pièces par soudure de deux couches métalliques, suivant lequel on apporte les couches métalliques sous vide sur les faces de liaison et on les soude l'une à l'autre sous vide, caractérisé en ce qu'avant d'apporter les couches (100, 200) métalliques, on apporte au moins sur l'une des couches de liaison, au moins une couche (101, 201) intermédiaire monomoléculaire en verre exempt de plomb.

2. Procédé suivant la revendication 1, caractérisé en ce que la couche (101, 201) intermédiaire est obtenue par saupoudrage ou par évaporation sous vide.

3. Procédé suivant la revendication 1 ou 2, caractérisé en ce qu'il consiste à apporter une couche (101, 201) intermédiaire d'une épaisseur maximale de 100 nm.

4. Procédé suivant l'une des revendications précédentes, caractérisé en ce qu'il consiste à usiner les faces (10, 20) de liaison avant d'y apporter la couche (101, 201) intermédiaire à une planéité inférieure à 1 micron et à une rugosité inférieure à 0,1 micron.

Fig.1

Fig.2

Fig.3

Fig.4